# EUROPEAN PATENT APPLICATION

(11) **EP 2 881 325 A1**
(43) Date of publication of application: **10.06.2015**
(21) Application number: 13195891.0
(22) Date of filing: 05.12.2013
(51) Int. Cl.: B64D 11/06

(54) **Tray table unit for an aircraft**

(71) Applicant: Zodiac Aerotechnics, 78370 Plaisir (FR)
(72) Inventor: Meckes, Rüdiger, 23919 Berkenthin (DE); Rittner, Wolfgang, 23623 Ahrensbök (DE); Boomgaarden, Günter, 23684 Scharbeutz (DE)
(74) Representative: Eisenführ Speiser

(57) **Abstract**

The invention relates to a tray table unit (1) for an aircraft, comprising a table body (10), a fixing means comprising at least one holding means (108) and at least one actuating means (105), wherein said at least one holding means is adapted to allow one or more objects standing on a surface of said table body to be released from said table body in a first status of said holding means, and to fix said one or more objects on said surface in a second status of said holding means, wherein said at least one actuating means is adapted to move said holding means from said first status to said second status and vice versa, a control unit (101), coupled to an acceleration sensor (102) for signal transmission, the control unit being adapted to activate said actuating means for said movement from said first status to said second status if an acceleration signal detected by and received from said acceleration sensor exceeds a predetermined threshold value stored within said control unit.

## Description

The Invention relates to a tray table unit for a passenger seat for use in an aircraft.

Such tray table units are usually mounted to the back or to the armrest of a passenger seat or are mounted to the wall of the cabin and may be foldable, extendible or the like to allow stowing away the table if it is not needed. A positioning recess in the table surface may serve to support and partly form-lock an object like a cup or a plate or a tablet. For example, there may be a recess of a circular shape to support a cup or a tin or a glass and there may be a recess of rectangular shape to support a rectangular bowl as they are typically used for serving meals. These types of positioning recesses may prevent such objects from slipping, from falling over or from falling off the tray table to a certain extent. However, in existing tray table units it has been observed that even though such objects are positioned in a recess the objects fall over or fall off the tray table during the flight. It has been further observed that objects were positioned in the positioning recess but do not exactly fit to the form and shape of the recess and fall over or fall off the tray table.

It is an objective of this invention to prevent objects from falling over or falling off the tray table.

According to the invention the problem is solved by a tray table unit, comprising: a table body, a holding means and an actuating means, wherein said at least one holding means is adapted to allow one or more objects standing on a surface of said table body to be released from said surface of said table body in a first status of said holding means, and to fix said one or more objects on said surface in a second status of said holding means; wherein said at least one actuating means is adapted to actuate said holding means from said first status to said second status and vice versa, a control unit, coupled to an acceleration sensor for signal transmission, the control unit being adapted to activate said actuating means for said actuation from said first status to said second status if an acceleration signal detected by and received from said acceleration sensor exceeds a predetermined threshold value stored within said control unit.

A tray table may be a tray or shelf mounted to or in a piece of furniture, such as an airplane seatback, designed to fold or swing out of the way for storage. The tray table may also be mounted to an armrest or to a wall of the cabin. The tray table may be fixed or switchable from a stored position to an operating/using position and vice versa. An "object" is to be understood as something perceptible by one or more of the senses, especially by vision or touch, for example tablets, cups, plates, silverware such as a spoon, a knife or a fork, electronic devices such as laptops, mobile phones, tablet computers, music players or video game devices, books, magazines, newspapers, pens and the like. The acceleration sensor means may be a common acceleration sensor that determines or detects the magnitude or the direction of acceleration of the aircraft or both. The acceleration sensor may be a sensor that is installed on board the aircraft at a control location and utilized by avionic and flight control systems.

The actuating means may be any suitable mechanism or drive or power unit to actuate the holding means, for example an electro-mechanical drive, a pneumatic drive, a shape memory actuator, a magnetic drive, a rotational or linear drive or a Piezo actuator or a combination thereof, from the first status to the second status. A holding means may be any suitable means to fix an object, for example like a mechanical or an active element like a shape memory alloy component or magnetic component or an electromagnetic component and the like or a combination thereof.

Actuating the holding means may be understood as to switch or move the holding means. Wherein in the first status, which may also be referred to as the "off"-status the objects are allowed to be released in the way that passengers may raise the object from the tray table und take these belongings whenever they want to whereas in the second status the object is fixed in its position on the tray table.

The control unit is coupled to the acceleration sensor for signal transmission, wherein coupled for signal transmission is to be understood as being capable of sending and/or receiving a signal. The control unit receives a signal from the acceleration sensor that characterizes the acceleration, and determines, for example by comparing the signal with a predetermined acceleration threshold signal stored in the control unit whether the received signal requires to activate the actuator, for example, if the predetermined threshold value is exceeded by the received signal for switching the holding means to the second status, which may also be referred to as the "on"-status, thus enabling the holding means to fix the object. The acceleration and the acceleration threshold value may be a value that is suitable to characterize the change in speed and/or direction of the aircraft. In particular, slow (smooth) and/or fast (abrupt) transition from one flight condition to another, for example descend, ascend, turns, sideslips, changes of engine power and the like and/or to indicate changes in speed and/or direction caused by sudden emerging natural phenomenona like thermal columns, gusts or lee waves caused by gravity waves.

According to a first preferred embodiment, the acceleration sensor is further adapted to detect the direction of the acceleration and said control unit is further adapted to maintain said actuating means in said first status if said acceleration signal received from said acceleration sensor indicates an acceleration value directed orthogonal to and away from said surface of the table body. According to this preferred embodiment the actuating means is not activated by the control unit if the acceleration signal received from the acceleration sensor indicates a change of direction in such that the directional component of the acceleration value correlates to an ascend of the aircraft, in the sense that the aircraft experiences a vertical movement only. In this scenario the object standing on the surface of the tray table is hold "automatically" because the object is pressed onto the surface of the tray table by the upward movement of the aircraft due to force of mass inertia.

Even further it is preferred that said acceleration sensor is integrated into said table body. This preferred embodiment will ensure that accelerations of the tray table itself are detected. For example, this may occur if a passenger accidently hits a tray table which may be in a using position. This may happen because of difficult light conditions, or because of a passenger stumbling. The integrated acceleration sensor may then detect this sudden incident of this single tray table and thus activate the holding means of said tray table only, whereas the holding means on other tray tables inside the aircraft are not activated.

According to a further preferred embodiment said tray table is mechanically coupled to a base to switch said tray table from a storing position to an operating position, and wherein said control unit is adapted to activate said actuating means from said first status to said second status if an operation sensor means coupled to said control unit indicates that said tray table is in said operating position and if said acceleration signal detected by and received from said acceleration sensor exceeds said predetermined threshold value. This further preferred embodiment ensures that under the preconditions that the tray table is in operating position the acceleration signal detected and received from the acceleration sensor may cause activation of the actuating means only.

Furthermore it is preferred that said tray table comprises a presence sensor, said presence sensor being adapted to detect whether an object is standing on said surface or a limited region of said surface of said table body, said presence sensor being coupled to said control unit for signal transmission, said control unit being adapted to activate said actuating means from said first status to said second status if a presence signal detected by and received from said presence sensor indicates an object standing on said surface of said table body and if said acceleration signal detected by and received from said acceleration sensor exceeds said predetermined threshold value. This preferred embodiment will ensure that even if the tray table is in operating position and even if an acceleration is experienced the actuating means will not be activated by the control unit unless the presence sensor detects an object standing on the surface of the tray table. The presence sensor may comprise a light barrier or a weight sensor or any other suitable means for detecting objects standing on the surface. The light barrier may be for example a "through beam barrier" or a "reflection light beam barrier".

Still further it is preferred, that said control unit is coupled to a switch for manually switching said actuating means from said first to said second status and vice versa. This preferred embodiment will enable a passenger, a crew member or a pilot to manually switch on or off the control unit. This may be required if, for example, the acceleration sensor, the control unit or the signal communication or a combination thereof is not working properly or if the holding means shall be activated before any intended handling or movements in the neighborhood of the table. It is understood that a passenger switch, that may be positioned, for example, right next to the reading light switch, may be activated and/or deactivated and/or overruled by a crew member or by a pilot using a master switch.

Furthermore, it is preferred that said actuating means comprises a shape memory alloy component wherein said shape memory alloy component has a different geometry in said first status than in said second status. A shape memory alloy component also known as smart metal, memory metal, memory alloy, muscle wire or smart alloy possesses the property, after being deformed, to recover its original shape after a thermal activation. Thermal activation may be any treatment with heat. This thermal activation may be provided for example by an electric current. If an acceleration received and detected by the acceleration sensor exceeds the predetermined threshold value the control unit activates the shape memory alloy component by thermal activation to deform the shape memory alloy component to its designated geometry and thus to fix the object with the shape memory alloy component that applies mechanical pressure to the object in second status. Alloys such as copper-aluminum-nickel, copper-zinc-aluminum, nickel-titanium, and iron-manganese-silicon may be used for the shape memory alloy component.

Still further, it is preferred that said holding means and said actuating means are formed as a single integral component. According to this embodiment the holding means and the actuating means form a single "actuating-holding-means", i.e an integral component. Said integral means may be connected to the control unit and may comprise a shape memory alloy component of a same kind as the actuating means comprising a shape memory alloy component described above. If an acceleration received and detected by the acceleration sensor exceeds the predetermined threshold value the control unit activates the integral means by a thermal activation to deform the shape memory alloy component to its designated geometry and thus to fix the object in second status. Such integral component may in particular comprise or consist of a SMAC.

In particular, it is preferred that said table body comprises at least one positioning recess with an elastomer in a peripheral zone of said positioning recess, the integral means being of a shape memory alloy component and being integrated into the elastomer to fix the object positioned into said positioning recess in the second status. It is understood that a recess may be a cavity or depression in the surface of the table body. An arrangement of several positioning recesses facilitates the positioning and thus the use of, for example, plates, cups and silverware when meals or drinks or the like are served. If an acceleration received and detected by the acceleration sensor exceeds the predetermined threshold value the control unit activates the integral means by thermal activation to deform the shape memory alloy component to a designated geometry and thus to fix the object that is positioned into the positioning recess in the second status.

According to a further preferred embodiment the object has a ferro metallic counter surface and said holding means comprises one magnetic means, wherein the magnetic means is adapted to not apply a magnetic force in said first status and to fix the object by applying a magnetic force in said second status. According to this preferred embodiment a magnetic means may be a common magnet capable of attracting an object standing on the surface of the tray table in the second status wherein the materials from which the magnet is made of may be an alloy based on iron, cobalt, nickel, aluminum or hexagonal ferrites and may have the shape of a cuboid or a cylinder. The ferro metallic counter surface may be of any material that is attracted to a magnet, for example an alloy based on iron, cobalt, nickel, aluminum or an alloy or an compound containing these elements. The magnet may be a rod magnet or a disc magnet that is moved from a first position in said first status to a second position in said second status. In the first status, the rod magnet may be positioned such that its magnetic field is mainly directed such that it does not attract the object and may be moved by the actuating means such that the magnetic field is mainly directed such that it attracts the object in the second status. This may also be provided by a circular permanent magnet that is inserted in a circular cavity which is bored through a center of two iron blocks wherein the halves are joined together with a non-ferro metallic component such as brass or aluminium. The circular permanent magnet may be rotated around a longitudinal axis about an angle of 90° from an "off" position to an "on" position and vice versa by the actuating means. If the magnet is in "off" position in the first status the poles of the magnet are in the non-ferro metallic component and the two iron halves act as a metallic keeper thus helping to avoid self-demagnetizing. In this position, an object is not attracted und thus released. If an acceleration received and detected by the acceleration sensor exceeds the predetermined threshold value the control unit activates the actuating means such that the magnet rotates to the "on" position wherein the poles of the magnet are in the two iron halves. In this position a magnetic field may effectively pass across the material of the tray table and the object with a ferro metallic counter surface standing on the surface of the tray table are attracted and fixed in the second status.

According to a further preferred embodiment said holding means comprises an electromagnetic component, wherein the electromagnetic component is adapted to allow the one object to be released in said first status and to fix the object having a ferro metallic counter surface by applying an electromagnetic force in said second status. According to this preferred embodiment the electromagnetic component is a device in which the electromagnetic field is produced by an electric current. If an acceleration received and detected by the acceleration sensor exceeds the predetermined threshold value the control unit activates the electromagnetic component by setting the coil winding under an electric current to generate a magnetic field to fix the object with a ferro metallic counter surface standing on the surface of the tray table in second status..

According to a further preferred embodiment said electromagnetic component is integrated into said table body.

Further it is preferred that the holding means comprises at least one first magnetic component, relatively fixed to said table body and at least one second magnetic component, relatively movable to said first magnetic component, wherein the actuating means is adapted to move said movable magnetic component in such that said fixed magnetic component functions with said movable magnetic component to generate a magnetic force to fix the object having a ferro metallic counter surface in said second status. According to this preferred embodiment the fixed magnetic means is a permanent magnet, for example a rod magnet. The movable magnetic means is also a permanent magnet, for example a rod magnet that is movable in relation to the fixed magnetic component. It is understood that moving the movable magnetic component may comprise turning, rotating, shifting, pushing, sliding, etc. If an acceleration signal received and detected by the acceleration sensor exceeds the predetermined threshold value the control unit activates the actuating means such that the movable magnetic component is moved into a designated position in a way that a magnetic field of the movable magnet and the fixed magnetic component have a same direction thus generating the magnetic force to attract and to fix the object standing on the surface of the tray table in second position.

Still further it is preferred, that said first and said second magnetic components are integrated into said table body.

According to a further preferred embodiment said holding means comprises a suction means, said suctions means being adapted to provide a first pressure in said first status that equals the pressure inside the cabin of the aircraft and to provide a second pressure in said second status that is less than said first pressure to fix the object in said second status. According to this embodiment a suction means may be a suction cup adapted to attach to a plain or a curved surface of an object to be fixed. It is understood that a suction means is an object that uses negative fluid pressure of air to adhere to surfaces. The suction means may be of a flexible material such as a rubber forming a recess or limiting a space which is open to one side, in which a partial vacuum can be created. The suction means may be connected to a vacuum unit, wherein the vacuum unit may be any vacuum unit that has already been implemented for another purpose in the aircraft for creating a negative fluid pressure and may further be connected to the control unit. If an acceleration signal received and detected by the acceleration sensor exceeds the predetermined threshold value, the control unit, coupled for signal transmission to the vacuum unit, activates the vacuum unit. A partial vacuum may now be generated enabling the suction means to fix the object standing on the surface of the tray table in second status.

It is further preferred that said holding means comprises a flexible netlike component wherein said flexible netlike component has a different geometry in said first status than in said second status. According to this preferred embodiment a netlike component, which may also be referred to as a weblike, netted, webby, webbed, etc. component may have open interstices. If the open interstices are very small the netlike component may also have the shape of a cloth or blanket or sheet. The difference in geometry is such that in the first status it has its normal shape. For example, the net is spread flatly on the surface of the tray table. In this even position of the net a passenger may place objects on it. The passenger may not even notice that there is a net. If the control unit activates an actuator the net fixes an object by changing the geometry of the net to partly or completely encircle the object. The material of the net may be selected from any suitable fabric that is capable of being elongated (tensioned) in any direction like synthetic fabrics or synthetic nano fabrics.

A further preferred embodiment is characterized in that said actuating means comprises a tension element wherein said tension element is integrated into said flexible netlike component, said flexible netlike component being adapted to allow the object to be released in said first status and to fix the object in said second status, said at least one tension element further being adapted to move said flexible netlike component from said first status to said second status. According to this preferred embodiment a tension element is an element that has the property to change its state or mode in order to move the net from the first to the second status. The tension element is a device that changes the tautness and controls the movement of the net. It is understood that the term "integrated" may also be referred to as meshed, joined, sewed, stitched or woven and may also be referred to as combined, coupled, linked, tied, etc to the flexible netlike component. It is further understood that it is not necessary that the tension element is integrated into the whole net. It may be sufficient if, for example that, only parts of the net like outer ends of the net comprise the tension element. It is also understood that more than one tension element may be utilized if desired. For example to create sections within the netlike component with a tension element, that may be divided in a tension segment, that may be activated independently from the other tension element and tension segment.

It is further preferred that said actuating means sets the tension element under a higher mechanical pre-stress in said first status than in said second status. According to this preferred embodiment the tension device is under the state or the condition of being pulled or stretched in the first status. In this pulled or stretched status the tension element may have a kind of tension energy, also referred to as strain energy. If an acceleration signal received and detected by the acceleration sensor exceeds the predetermined threshold value the control unit activates the actuating means such that the tension element converts its tension energy into a kinetic energy to move along a path horizontally to and vertically away from the surface of the table body, thus forming a geometry that may show a kind of animal trap or open basket. The geometry of the netlike component in said second status may be of all kinds of geometric bodies with a cavity on the upper side, wherein the cavity defines an empty or hollow space within the body, also depending on the number, the size and the weight of the objects, like a hemispherical shape. The term cavity refers to the opening of the geometric body as a whole that is formed in the second status and may not be referred to the possible occurrence of open interstices of the net. The tension element may comprise any material that is suitable for the purpose of being set under a higher tension in the first status than in the second status.

An even further preferred embodiment is characterized in that said actuating means sets the tension element under a lower pre-stress in said first status than in said second status. According to this preferred embodiment the tension of the tension element in the first status is lower than in second status. If an acceleration signal received and detected by the acceleration sensor exceeds the predetermined threshold value the control unit activates the actuating means such that the tension element develops strain or tension to move along a path horizontally to and vertically away from the surface of the table body, just like described above. This embodiment functions as to say like a mirror to the above described embodiment wherein the tension element is under stress in the first status und under lower stress in second status. The tension element may comprise any material that is suitable for the purpose of being set under a higher tension in the second status than in the first status.

Furthermore, it is preferred that the tension element is integral with the actuating means and is manufactured from a material selected from a shape memory alloy component, a nano synthetic material or any other suitable material or a combination thereof. If a shape memory alloy component is selected and if an acceleration signal received and detected by the acceleration sensor exceeds the predetermined threshold value the control unit activates the tension element with a thermal activation to deform the tension element to a designated geometry and thus to move the flexible netlike component from the first to the second status and vice versa.

Still further, it is preferred that said holding means comprises a flexible netlike component, wherein said flexible netlike component is in a non-tension state in said first status and in a tension state in said second status, the net further being adapted to loosely hold the object in said first status and further wherein said actuating means is adapted to move said flexible netlike component from said first status to said second status if said acceleration signal detected by and received from said acceleration sensor exceeds said predetermined threshold value to fix the object in second status. According to this preferred embodiment, the flexible netlike component is manually pulled up and away from the surface to allow the object to be pushed under the net in the first status. If an object is positioned under the net it is then loosely hold by the net. The tension of the net may not be strong enough in the first status to fix the object in case of a sudden acceleration of the aircraft or the table and may thus allow a user to take out the object. If an acceleration signal received and detected by the acceleration sensor exceeds the predetermined threshold value the control unit activates the actuators such that the net or a part of it is contracted towards the surface of the tray table thus pressing the object stronger onto the surface of the tray table in second status.

A further aspect of the invention is a method for fixing one or more objects standing on a surface of a table body in an aircraft comprising the steps of:
- Providing fixing means comprising at least one holding means and at least one actuating means,
- Detecting an acceleration signal with an acceleration sensor and transmitting the acceleration signal to a control unit adapted to compare the detected acceleration value with a predetermined threshold value stored in the control unit, and
- Activating the actuating means if the detected acceleration value is greater than the stored threshold value in a way that the holding means are moved from a first status, wherein an object is allowed to be released from the holding means, to a second status, wherein the holding means fixes the at least one object.

Further, it is preferred that the method as described above comprises the steps of
- detecting with a presence sensor the at least one object standing on the tray table and
- transmitting a presence signal from the presence sensor to the control unit.

Even further, it is preferred that the method as described above comprises the step of activating a shape memory alloy component to move from said first status to said second status.

Furthermore, is preferred that the method as described above comprises the step of activating a suction means in away that it has less pressure in said second status than in said first status.

It is further preferred, that the method as described above comprises the step of activating a magnetic component in a way that it applies a magnetic force in said second status.

Further, it is preferred that the method as described above comprises the step of mechanically pre-stressing a tension element integrated into a flexible netlike component in said first status and relieving the mechanically pre-stressed tension element in said second status.

Even further, it is preferred that the method as described above comprises the step of
- providing a tension element integrated into a flexible netlike component which is under no stress in said first status and
- mechanically stressing said tension element in said second status.

A further aspect of the invention is a use of a holding means and a control unit to fix an object standing on a tray table for an aircraft, characterized in that the holding means, having a first status wherein objects are released by the holding means and a second status wherein the objects are fixed by the holding means, being moved from the first status to the second status and vice versa with an actuating means activated by the control unit coupled to an acceleration sensor for signal transmission if an acceleration value detected and received from the acceleration sensor is greater than a predetermined threshold value stored in the Control unit.

Preferred embodiments of the invention are described in connection with the Figures:
Figures 1a-1d show a preferred embodiment of the invention. Figures 1a-1d follow each other in time and show an interaction of components before and after an occurrence of an acceleration in form of a schematic view.
Figures 2a and 2b show a schematic top view of a holding means of a preferred embodiment of the invention in a first and a second status.
Figures 3a and 3b show a schematic top view of an integral means of a preferred embodiment of the invention in a first and a second status.
Figures 4a and 4b show a schematic side view of a holding means with one magnetic component of a preferred embodiment of the invention in a first and a second status
Fig. 4c shows a further schematic view of the magnetic component of Fig. 4a-4b.
Figures 5a and 5b show a schematic side view of a holding means with one magnetic component of yet another preferred embodiment of the invention in a first and a second status.
Fig. 6 shows a schematic side view of a holding means with a fixed and a movable magnetic component of a preferred embodiment of the invention in a first and a second status.
Fig. 7 shows a schematic side view of a holding means with an electro magnetic component of a preferred embodiment of the invention in a second status.
Fig. 8 shows a schematic side view of a holding means with a suction means of a preferred embodiment of the invention.
Figures 9a and 9b show a schematic side view of a holding means with a flexible netlike component of a preferred embodiment of the invention in a first and a second status.

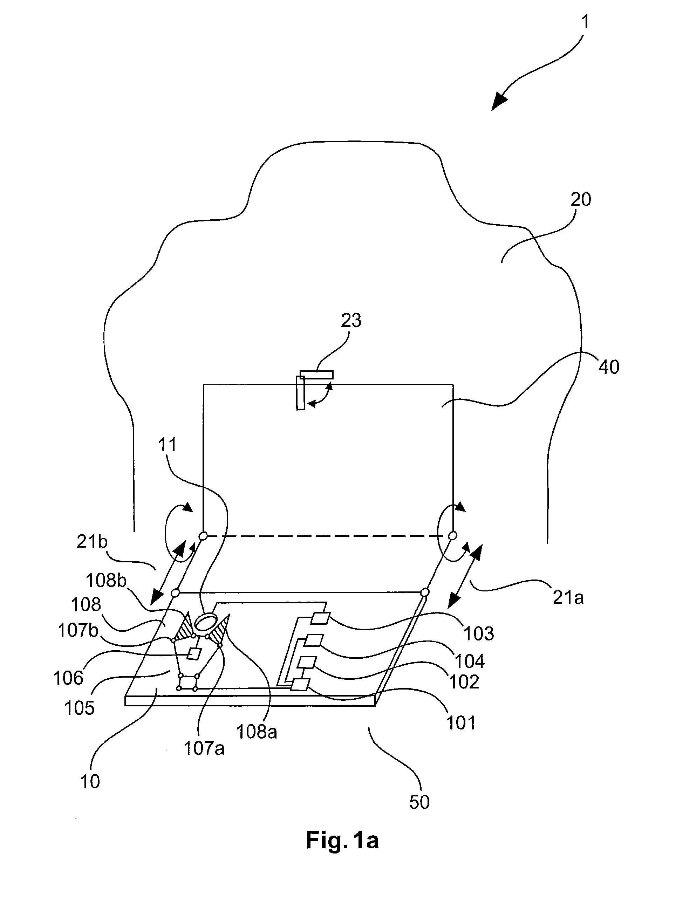

Fig. 1a shows a tray table unit 1 according to a preferred embodiment of the invention mounted to a backside of a passenger seat 20 in an aircraft. Said tray table unit 1 comprises a table body 10 which has a cylindrically shaped cavity forming a positioning recess 11 for positioning an object 30 (not shown). The tray table unit 1 further comprises an actuating means 105, an acceleration sensor 102, a presence sensor 103 an operation sensor 104 and a control unit 101. Said control unit 101 is coupled for signal transmission to said actuating means 105 and to said sensors 102, 103 and 104. Said control unit is further connected to a power supply (not shown) for supplying energy.

Said table body 10 is connected to a base 21a and 21 b to switch said table body 10 from a storing position 40 to an operating position 50 and vice versa. A turnable lever 23 holds said table body in said storing position 40. By turning the lever 23 a passenger may switch the table body 10 from the storing position 40 to the operating position 50. Said operation sensor 104 is adapted to detect whether said table body 10 is in operating position 50 and to transmit a corresponding operation signal to the control unit 101 that indicates whether the table body 10 is in operating position 50. Immediately after said table body 10 has been released from said storing position by turning the lever 23 counterclockwise, for example 90° counterclockwise, said operation sensor 104 signals said operating position 50 to said control unit 101. In the storing position 40 the lever 23 has a vertical alignment. In the operating position the lever 23 has a horizontal alignment. As can be seen in Fig. 1a said table body 10 is in said operating position 50.

The tray table unit 1 further comprises a holding means 108 adapted to release an object 30 (not shown) in a first status and to fix said object 30 (not shown) in a second status. As can be seen, said holding means 108 is in said first status and the object 30 (not shown) may be positioned in the positioning recess 11. As can further be seen in Fig. 1a said holding means 108 may be a means that comprises a grabber arm 108a and a grabber arm 108b for fixing and releasing said object 30 (not shown). As can be further seen the geometry of the grabber arms 108a, 108b is that of a triangle.

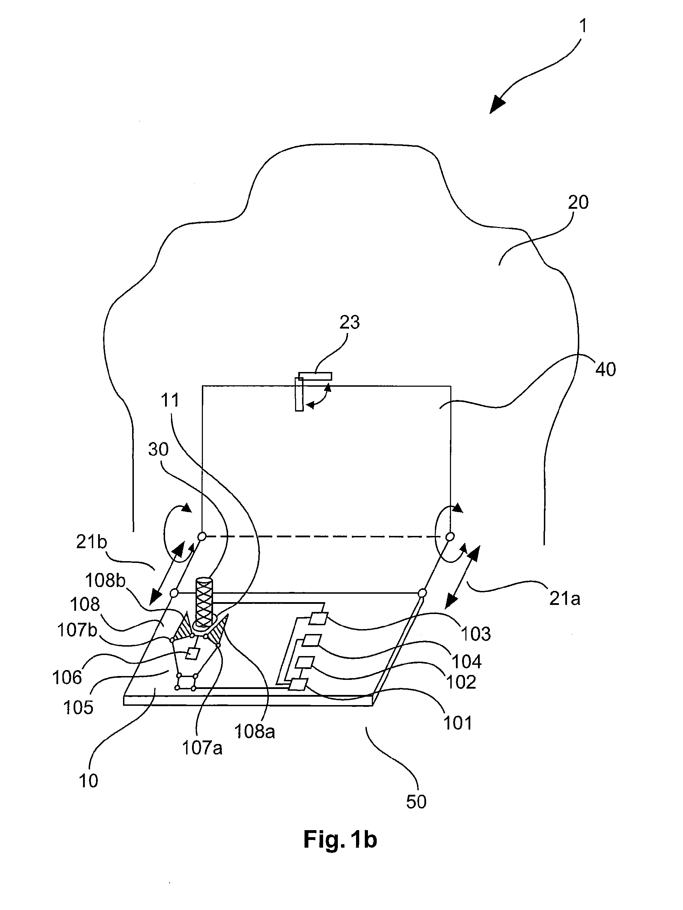

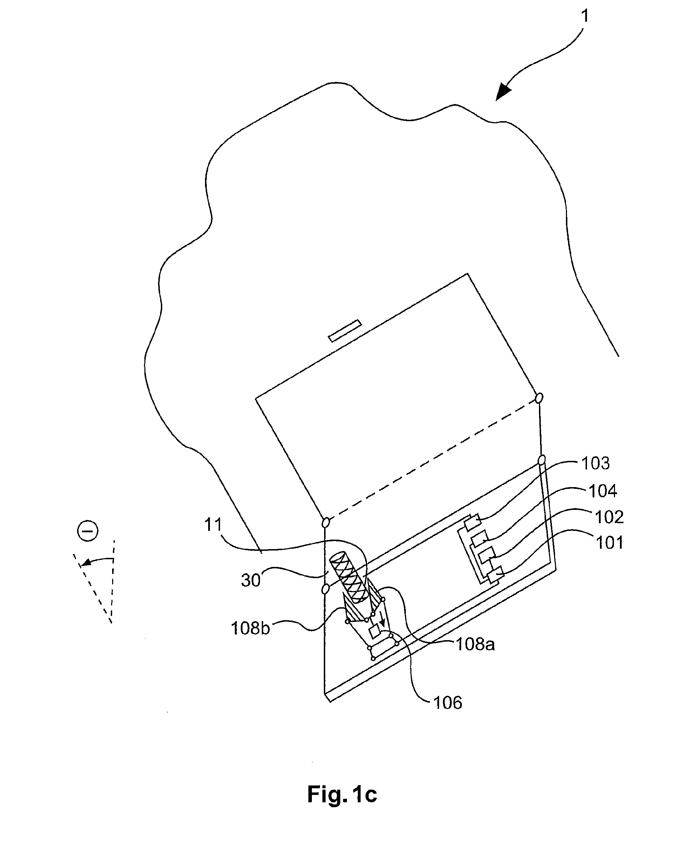

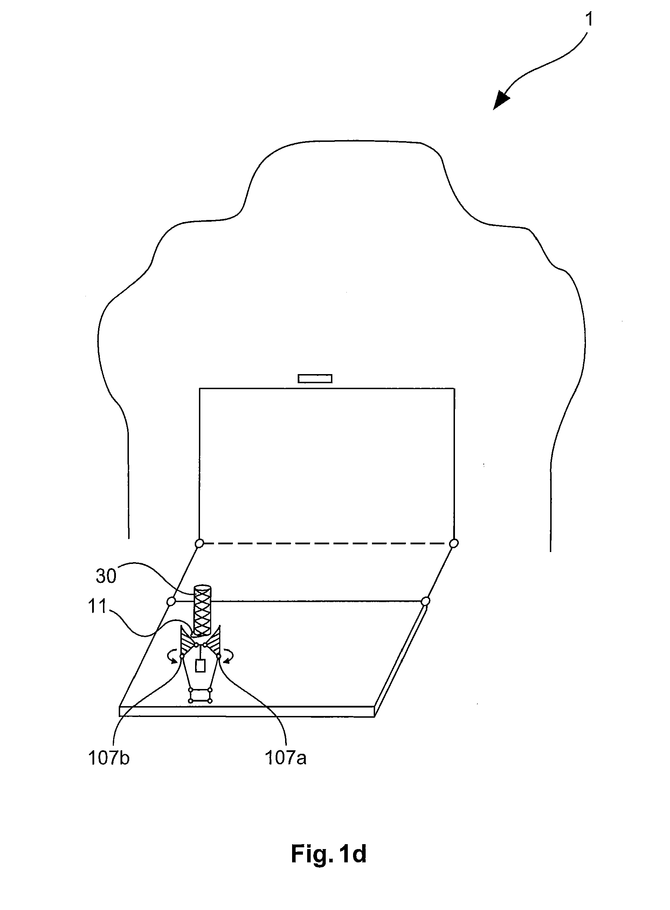

Said actuating means 105 is adapted to actuate said holding means 108 from said first status to said second status and vice versa. In Fig. 1a said actuating means 105 further comprises a linear pull actuator 106 made of a shape memory alloy component and active joints 107a, 107b also made of a shape memory alloy component. The linear pull actuator 106 is adapted to actuate the holding means 108 in the first status. Active joints 107a, 107b are adapted to actuate said holding means 108 back to the first status. In other words: By activating said actuating means 105 in Fig. 1 a in the first status the linear actuator 106 is being activated for said actuation of said holding means 108 from the first to the second status. By activating said actuating means 105 in the second status said active joints 107a, 107b are being activated for said actuation of said holding means 108 from the second to the first status. The actuating means 105 is activated with an electric current.

Said control unit 101 coupled to said acceleration sensor 102 for signal transmission, said acceleration sensor being adapted to determine or detect a rate of change of velocity of the aircraft or of the table body 10, receives an acceleration signal from said acceleration sensor 102, and is adapted to activate said actuating means 105 if a predetermined threshold value is exceeded by the received acceleration signal for actuating said holding means 108 to the second status. Said control unit 101 is further adapted to activate said actuating means 105 for said actuation from second to first status.

Said presence sensor 103 is adapted to detect a presence of said object 30 (not shown) and to transmit a corresponding presence signal to said control unit 101. In Fig. 1 a photo electric sensor is utilized and integrated into said positioning recess 11. If a light beam of said photo electric sensor is interrupted by said object 30 (not shown), said control unit 101 receives said corresponding presence signal from said photo electric sensor.

Said control unit is further adapted to not actuate said actuating means 105 if said acceleration signal received from and determined by said acceleration sensor 102 is greater than said threshold value stored in said control unit 101 if no presence of said object 30 (not shown) is detected.

Fig. 1b shows the tray table unit 1 according to the invention with the object 30 positioned in the positioning recess 11 in the operating position 50 and in the first status. The presence sensor 103 detects said presence of the object 30 and transmits said corresponding presence signal to the control unit 101. In this situation the object 30 is releasable from the holding means 108 as said holding means 108 remains in the first status.

The situation shown in Fig. 1b further represents a regular flight situation, wherein the object 30 is positioned in the positioning recess 11 with the holding means 108 remaining in the first status.

Fig. 1c shows the tray table unit 1 according to Fig. 1b in the second status. In this situation the operating position and the presence of the object 30 is indicated by the respective sensors 104 and 103. The acceleration sensor 102 determines a rate of change of a velocity of the aircraft. The change of velocity is indicated with an arrow and the inclined tray table unit 1 indicated by the angle θ in Fig. 1c. In particular, the acceleration sensor 102 detects a change of a magnitude and a direction as the aircraft is making a turn and transmits the corresponding acceleration signal to the control unit 101.

Said control unit 101 receives said acceleration signal from and detected by said acceleration sensor 102, the received signal being greater than a predetermined threshold value stored in said control unit 101, activates said actuating means 105 with an electric current to actuate said holding means 108 from the first status to the second status, to fix said object 30 in the positioning recess 11 in the second status.

As can be seen in Fig. 1c the actuating means 105 utilizes the linear pull actuator 106 to actuate said grabber arms 108a, 108b of said holding means 108 from the first to the second status as indicated with an arrow. In the situation as shown in Fig. 1c the object 30 is fixed by the grabber arms 108a and 108b of said holding means 108 and remains positioned in said positioning recess 11.

Fig. 1d shows the tray table unit 1 according to the invention after the aircraft has returned to the regular flight situation of Fig. 1b. The control unit 101 (not shown) receives an acceleration signal from and detected by the acceleration sensor 102 (not shown) said acceleration signal being less than said threshold value stored in the control unit 101 (not shown) and activates with an electric current the active joints 107a, 107b of the actuating means 105 to actuate the holding means 108 from said second status to said first status. Now, said object 30 is released again.

As can be seen in Fig. 1d the actuating means 105 utilizes the two active joints 107a, 107b to actuate the grabber arms 108a, 108b of the holding means 108 for movement to the first status as indicated with an arrow.

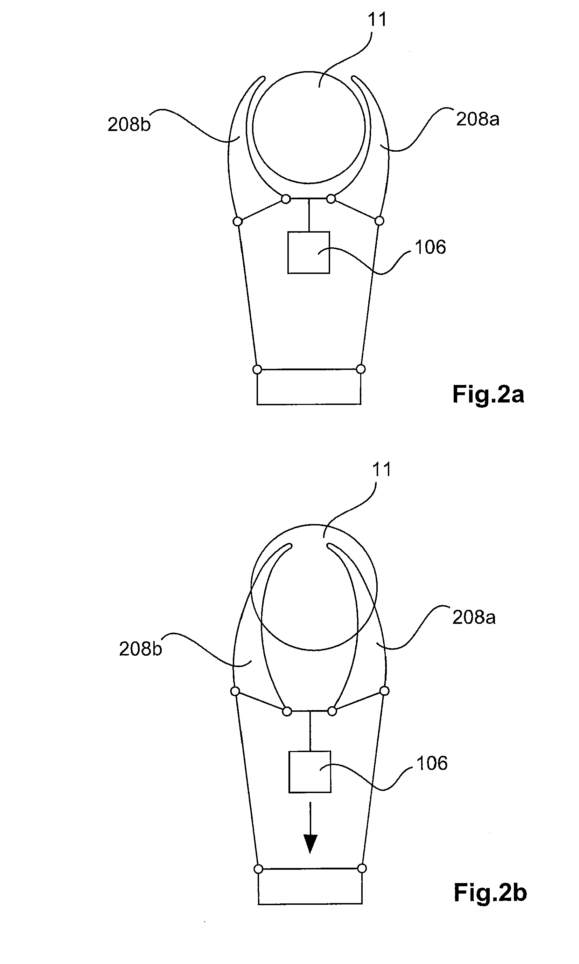

Fig. 2a, 2b show a preferred embodiment of the invention with an alternative holding means 208. Similar and identical elements as shown in Figures 1a-1d are indicated with the same reference signs. Holding means 208 comprises a grabber arm 208a and 208b. As can be seen, the grabber arms 208a, 208b have the geometry of a sickle and may surround the object 30 (not shown) in the second status. Fig. 2a further shows the holding means 208 in first status, Fig. 2b shows the holding means 208 in the second status.

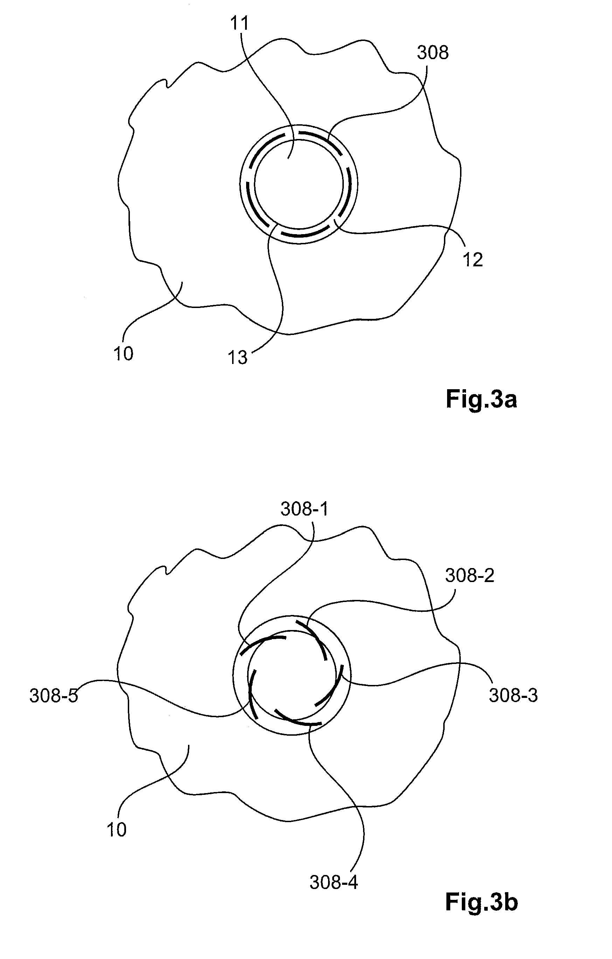

Figures 3a, 3b show another preferred embodiment of the invention. Similar and identical elements as shown in Figures 1a-1d are indicated with the same reference signs. According to this preferred embodiment a holding means and an actuating means are adapted to form an integral means 308. Said integral means 308 comprises a shape memory alloy component and is integrated into an elastomer 12 of a peripheral zone 13 of the positioning recess 11 and is connected to the control unit 101. As can bee seen in Fig. 3a five integral means 308-1, 308-2, 308-3, 308-4 and 308-5 are integrated into the elastomer 12 and around the positioning recess 11. The integral means 308-1, 308-2, 308-3, 308-4 and 308-5 are single shape memory wires.

If an acceleration signal received from and detected by the acceleration sensor 102 (not shown) exceeds a predetermined threshold value the control unit 101 (not shown) activates said integral means 308-1, 308-2, 308-3, 308-4 and 308-5 by a thermal activation to deform the integral means 308-1, 308-2, 308-3, 308-4 and 308-5 to a designated geometry and thus to fix the object 30 (not shown) in the second status, as shown in Fig. 3b.

To be moved back from the second to the first status the control unit 101 (not shown) receives an acceleration signal from and detected by the acceleration sensor 102 (not shown) said acceleration signal being less than said threshold value stored in the control unit 101 (not shown) and activates another actuator (not shown) with an electric current.

It is understood that the integral means 308 may differ in geometry, size or number and the like as there are many possibilities to design and to integrate the integral means 308 to the positioning recess. It is further understood that it is a matter of design choice to adapt the wires 308-1, 308-2, 308-3, 308-4 and 308-5 such that only one end of said wires is moved towards said center of the positioning recess 11 or maybe both ends of said wires are moved while a middle part of said wires remains fixed in the elastomer 12.

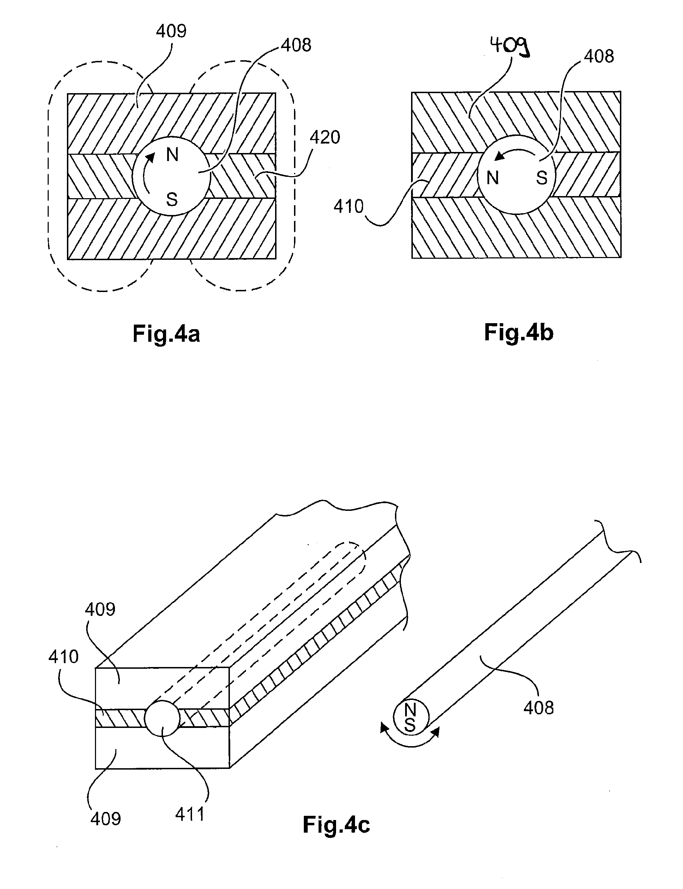

Figures 4a, 4b, and 4c show a preferred embodiment of the invention with an alternative holding means 408.

Figures 4a, 4b, and 4c show a cylindrical magnetic component 408. Similar and identical elements as shown in Figures 1a-1d are indicated with the same reference signs. In Figures 4a and 4b the cylindrical magnetic component 408 is inserted into two halves of an iron block 409, the two halves being joined together by a non ferrous component 410, for example aluminium or brass.

As indicated by an arrow in Fig. 4a and 4b the cylindrical magnetic component 408 is being rotated by an actuating means 405 (not shown) to move from the first status (Fig. 4b) to the second status (Fig. 4a) and vice versa. As can further be seen in Fig. 4b, in the first status the magnetic poles (the North pole being indicated by an N, the South pole being indicated by an S) of the cylindrical magnetic component 408 face the non ferrous metallic component 410. The Object 30 (not shown) with a ferro metallic counter surface that stands on a surface of the table body 10 is not attracted by a magnetic field. By rotating the cylindrical magnetic component 408 with the actuationg means 405 (not shown) such that the magnetic poles face an iron side, a direction of a magnetic field is changed and now the object 30 (not shown) with a ferro metallic counter surface is attracted.

If the control unit 101 (not shown) receives an acceleration signal from and detected by the acceleration sensor 102 (not shown), the received signal being greater than a predetermined threshold value stored in said control unit 101 (not shown), the control unit 101 (not shown) activates said actuating means 405 (not shown) with an electric current to actuate the cylindrical magnetic component 408 from the first status to the second status, to fix said object 30 standing on the surface of the table body 10 in the second status.

If the control unit 101 (not shown) receives an acceleration signal from and detected by the acceleration sensor 102 (not shown) that is less than the threshold value stored in the control unit 101 (not shown), the control unit 101 (not shown) activates the actuating means 405 with an electric current to actuate the cylindrical magnetic component 408 to move to the first status. Now, the object 30 (not shown) is released.

Fig. 4c shows the cylindrical magnetic component 408 outside of the two halves of the iron block 409 with a round cavity 411 bored through a center of the iron block 409.

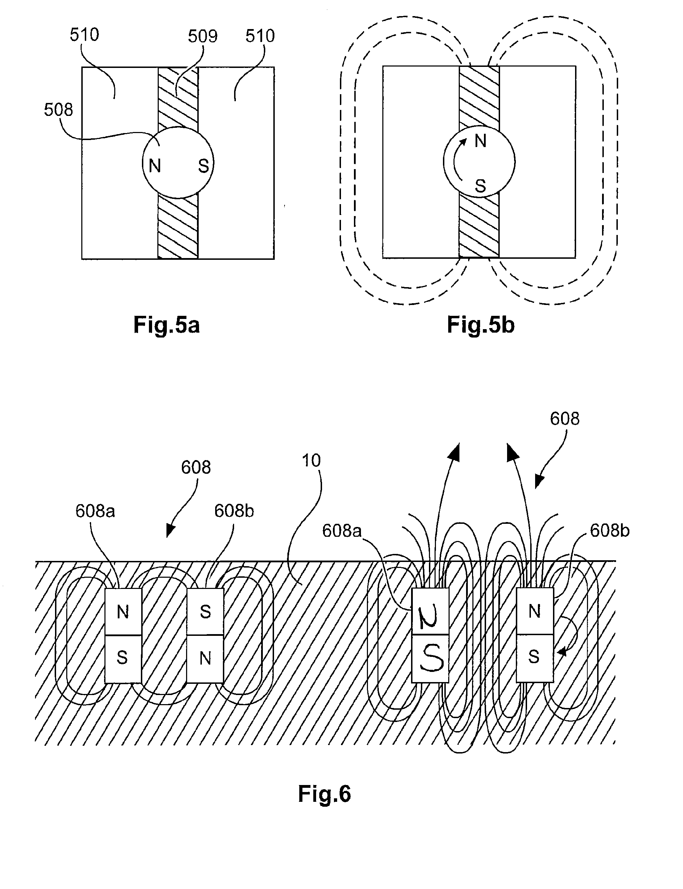

Figures 5a and 5b show a preferred embodiment of the invention with yet another holding means 508. The difference between Fig. 5a-b and Fig. 4a-c is that a cylindrical magnetic component 508 is inserted into two halves of a non ferrous metallic component 510, the two halves being joined together by an iron block 509. In other words, the embodiment shown in Fig. 5a and 5b is as to say an inversion of the embodiment of Fig. 4a-4c.

Fig. 6 shows a further preferred embodiment of the invention with another alternative holding means. Similar and identical elements as shown in Figures 1a-1d are indicated with the same reference signs. In Fig. 6 a holding means 608 comprises a magnetic component 608a and a magnetic component 608b. Both components are permanent magnets and as shown, have the geometry of a cuboid. Magnetic component 608a is relatively fixed to the table body 10. Magnetic component 608b is relatively movable to said fixed magnetic component 608a. An actuating means 608 is adapted to move said movable magnetic component 608b in such that said fixed magnetic component 608a functions with said movable magnetic component 608b to generate a magnetic force to fix the object 30 (not shown) with a ferro metallic counter surface in the second status. The actuating means 608 may be any drive or power unit suitable to move said movable magnetic component 608b.

The two magnetic components on the left side of Fig. 6 show a position of the magnetic components 608a, 608b in the first status. The two magnetic components 608a, 608b on the right side show a position of the magnetic components 608a, 608b in the second status. In the first status, as can be seen, the North Pole (indicated with an "N") of the fixed magnetic component 608a is horizontally facing the South Pole (indicated wit an "S") of the movable magnetic component 608b. As indicated by lines, a magnetic field generated by each of the magnetic components 608a, 608b is very weak and said fields almost neutralize each other in this situation.

If the control unit 101 (not shown) receives an acceleration signal from and detected by the acceleration sensor 102 (not shown), the received signal being greater than a predetermined threshold value stored in said control unit 101 (not shown), the control unit 101 (not shown) activates the actuating means 605 (not shown) with an electric current to actuate the movable magnetic component 608b from the first status to the second status, to fix the object 30 with a ferro metallic counter surface standing on a surface of the table body 10 in the second status. The movable magnetic component 608b is rotated by said actuating means 605 (not shown) by an angle, for example of 180° around a longitudinal axis, as indicated with an arrow, such that the same poles of the magnetic components 608a, 608b face each other horizontally. Now, a magnetic field generated by the fixed magnetic component 608a and a magnetic field generated by the movable magnetic component 608b are superimposed and said object 30 (not shown) is attracted.

If the control unit 101 (not shown) receives an acceleration signal from and detected by the acceleration sensor 102 (not shown) that is less than the threshold value stored in the control unit 101 (not shown) the control unit 101 (not shown) activates the actuating means 605 (not shown) with an electric current to actuate the movable magnetic component 608b to move to the first status. Now, the object 30 (not shown) is released.

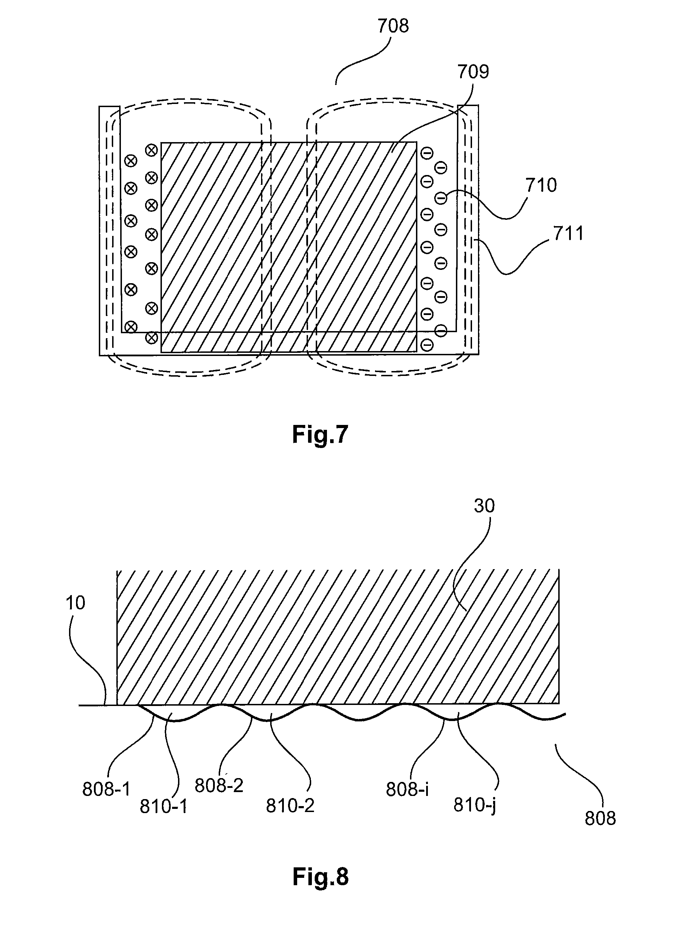

Fig. 7 shows a further preferred embodiment of the invention with yet another alternative magnetic holding means. Similar and identical elements as shown in Figures 1a-1d are indicated with the same reference signs. A holding means 708 in Fig. 7 is an electro magnetic component. Fig. 7 shows that the electric magnetic component 708, that comprises a coil winding 710 around a soft iron core 709 surrounded by a structure 711, generates a magnetic field if the coil winding 710 is under an electric current.

If the control unit 101 (not shown) receives an acceleration signal from and detected by the acceleration sensor 102 (not shown), the received signal being greater than a predetermined threshold value stored in said control unit 101 (not shown), the control unit 101 (not shown) activates the electro magnetic component 708 by setting the coil winding 710 under an electric current thus generating an electro magnetic force to fix the object 30 (not shown) with a ferro metallic counter surface standing on a surface of the table body 10 in the second status.

If the control unit 101 (not shown) receives an acceleration signal from and detected by the acceleration sensor 102 (not shown) that is less than the threshold value stored in the control unit 101 (not shown) the control unit 101 (not shown) deactivates the electromagnetic component 708 by not setting the coil winding 710 under an electric current. The situation wherein the coil winding is not set under an electric current corresponds to the first status, in which the object 30 (not shown) is released.

Fig. 8 shows a further preferred embodiment of the invention with yet another preferred holding means 808. Similar and identical elements as shown in Figures 1a-1d are indicated with the same reference signs. Fig. 8 shows a suction means 808 that comprises suction cups 808-1, 808-2, ... 808-i. As can be seen, the suction cups 808-1, 808-2, ... 808-i are integrated into the table body 10

The suction cups 808-1, 808-2, ... 808-i are adapted to use negative fluid pressure of air to adhere to a surface of the object 30. The suction cups 808-1, 808-2, ... 808-i are of a flexible material such as a rubber, in which a partial vacuum can be created. The suction cups 808-1, 808-2, ... 808-i are connected to a vacuum unit (not shown), which is a vacuum unit that has already been implemented for another purpose in the aircraft for creating a negative fluid pressure. If the object 30 is positioned on a surface of the table body with integrated suction cups 808-1, 808-2, ... 808-i said suction cups and a bottom part of the object 30 enclose spaces 810-1, 810-2, ... 810-j. Via suitable connections (not shown) the vacuum unit generates a partial vacuum in the enclosed spaces 810-1, 810-2, ... 810-j if activated by the control unit 101 (not shown).

In the first status the pressure in the spaces 810-1, 810-2, ... 810-j is the same as the ambient pressure of the cabin. The object 30 is released.

In the second status, if partial vacuum is created, the enclosed spaces 810-1, 810-2, ... 810-j have less pressure than the ambient cabin pressure. Thus the suction cups 808-1, 808-2, ... 808-i are enabled to fix the object 30 by means of a negative pressure.

If the control unit 101 (not shown) receives an acceleration signal from and detected by the acceleration sensor 102 (not shown), the received signal being greater than a predetermined threshold value stored in said control unit 101 (not shown), the control unit 101 (not shown) activates the vacuum unit (not shown) with an electric current to actuate the suction cups from the first to the second status to fix the object 30 standing on a surface of the table body 10 in the second status.

If the control unit 101 (not shown) receives an acceleration signal from and detected by the acceleration sensor 102 (not shown) that is less than the threshold value stored in the control unit 101 (not shown) the control unit 101 (not shown) transmits a corresponding signal to the vacuum unit (not shown) to actuate the suction cups 808-1, 808-2, ... 808-i from the second to the first status. Now the object 30 is released, again.

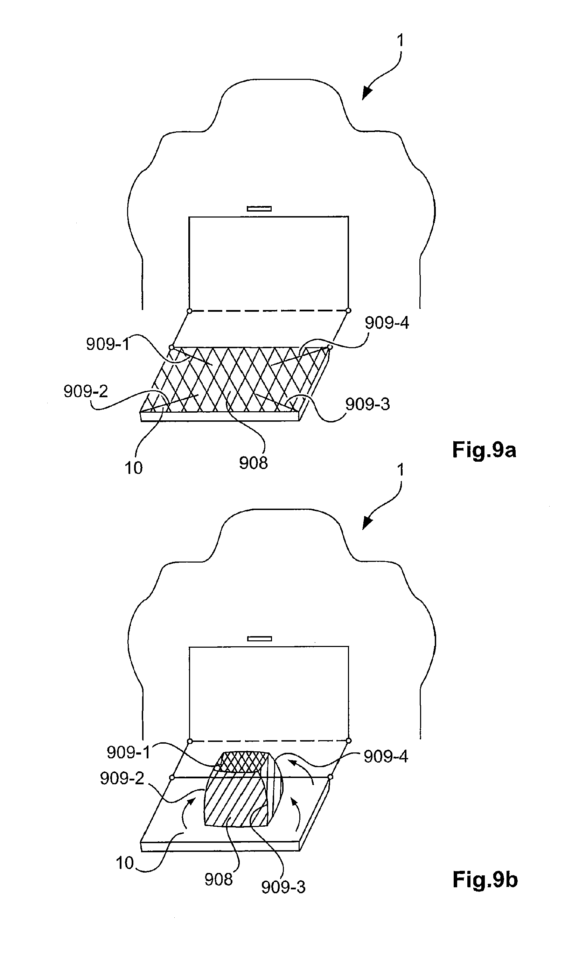

Fig. 9a and 9b show a further preferred embodiment of the invention with a holding means 908 that comprises a flexible netlike component in the first and the status. Similar and identical elements as shown in Figures 1a-1d are indicated with the same reference signs. In Fig. 9a the flexible netlike component 908 has the shape of a thin blanket and is spread out flatly on a surface of the table body 10 in the first status.

The netlike component 908 further comprises a tension element 909 being integrated into the netlike component 908. The tension element is a shape memory alloy component, like a shape memory wire, and serves for the purpose to move the flexible netlike component 908 from the first status to the second status and vice versa.

As can be see in Fig. 9 four tension elements 909-1, 909-2, 909-3 and 909-4 are integrated into the netlike component 908 such that an end of each tension element is at a corner of the table body 10 and an other respective end of each tension element is in a center area of the table body 10. Said ends in said center area are releasably mounted to the table body 10 in said center area and are each connected to the control unit 101. If an acceleration signal received from and detected by the acceleration sensor 102 (not shown) exceeds a predetermined threshold value the control unit 101 (not shown) activates said tension elements 909-1, 909-2, 909-3 and 909-4 by a thermal activation to deform said tension elements 909-1, 909-2, 909-3 and 909-4 to a designated geometry and thus to fix the object 30 (not shown) in second status, as shown in Fig. 9b. The geometry of the net is now the one of an open cage or basket, fixing the object 30 (not shown) inside the basket.

To be moved back from the second to the first status the control unit 101 (not shown) receives an acceleration signal from and detected by the acceleration sensor 102 (not shown) said acceleration signal being less than said threshold value stored in the control unit 101 (not shown) and activates the tension elements 909-1, 909-2, 909-3 and 909-4 (not shown) by a thermal activation to move from the second to the first status.

## Claims

1. Tray table unit for an aircraft, comprising
- a table body,
- a fixing means comprising at least one holding means and at least one actuating means,
wherein said at least one holding means is adapted
o to allow one or more objects standing on a surface of said table body to be released from said table body in a first status of said holding means, and
o to fix said one or more objects on said surface in a second status of said holding means,
wherein said at least one actuating means is adapted to move said holding means from said first status to said second status and vice versa,
- a control unit, coupled to an acceleration sensor for signal transmission, the control unit being adapted to activate said actuating means for said movement from said first status to said second status if an acceleration signal detected by and received from said acceleration sensor exceeds a predetermined threshold value stored within said control unit.

2. Tray table unit according to any of the preceding claims,
Wherein said tray table further comprises a presence sensor, said presence sensor being adapted to detect whether an object is standing on said table body, said presence sensor further being coupled to said control unit for signal transmission, said control unit being adapted to activate said actuating means from said first status to said second status if a presence signal detected by and received from said presence sensor indicates the at least one object standing on said table body and if said acceleration signal detected by and received from said acceleration sensor exceeds said predetermined threshold value to fix said at least one object by said holding means.

3. Tray table unit according to any of the preceding claims,
Wherein said tray table is coupled to a base to switch said tray table from a storing position to an operating position, and wherein said control unit is adapted to activate said actuating means from said first status to said second status if said tray table is in said operating position and if said acceleration signal detected by and received from said acceleration sensor exceeds said predetermined threshold value

4. Tray table unit according to any of the preceding claims,
Wherein said actuating means comprises a shape memory alloy component wherein said shape memory alloy component has a different geometry in said first status than in said second status.

5. Tray table unit according to any of the preceding claims,
Wherein said at least one holding means and the at least one actuating means are integral.

6. Tray table unit according to any of the preceding claims,
Wherein the object has a ferro metallic counter surface and wherein said at least one holding means comprises at least one magnetic means, wherein the at least one magnetic means is adapted to not apply a magnetic force in said first status and to fix the at least one object by applying a magnetic force in said second status.

7. Tray table unit according to any of the preceding claims,
Wherein said at least one holding means comprises a suction means, said suctions means being adapted to provide a first pressure in said first status that equals the pressure inside the cabin of the aircraft and to provide a second pressure in said second status that is less than said first pressure to fix the at least one object in said second status.

8. Tray table unit according to any of the preceding claims,
Wherein said at least one holding means comprises a flexible netlike component wherein said flexible netlike component has a different geometry in said first status than in said second status.

9. Tray table unit according to claim 8,
Wherein said actuating means comprises at least one tension element and wherein said at least one tension element is integrated into said flexible netlike component, said flexible netlike component being adapted to allow the at least one object to be released in said first status and to fix the at least one object in second status, said tension element further being adapted to move said flexible netlike component from said first status to said second status.

10. Tray table unit according to claim 9,
- Wherein said actuating means sets said tension element under a higher mechanical pre-stress in said first status than in said second status or
- Wherein said actuating means sets said tension element under a lower pre-stress in said first status than in said second status.

11. Tray table unit according to one of the preceding claims 8-10,
Wherein said tension element is selected from a shape memory alloy component, a nano synthetic material or any other suitable material or a combination thereof.

12. Tray table unit according to any of the preceding claims,
Wherein said at least one holding means comprises a flexible netlike component, wherein said flexible netlike component is in a non-tension state in said first status and in a tension state in said second status, the net further being adapted to loosely hold the at least one object in said first status and further wherein said at least one actuating means is adapted to move said flexible net-like component from said first status to said second status if said acceleration signal detected by and received from said acceleration sensor exceeds said predetermined threshold value to fix said at least one object in second status.

13. A method for fixing one or more objects standing on a surface of a table body for use in an aircraft comprising the steps of:
- Providing fixing means comprising at least one holding means and at least one actuating means,
- Detecting an acceleration signal with an acceleration sensor and transmitting the acceleration signal to a control unit adapted to compare the detected acceleration value with a predetermined threshold value stored in the control unit, and
- Activating the actuating means if the detected acceleration value is greater than the stored threshold value in a way that the holding means are moved from a first status, wherein objects are allowed to be released by the holding means, to a second status, wherein the hold-ing means fixes the at least one object.

14. A method according to claim 13,
With the steps of
- detecting with a presence sensor the at least one object standing on the tray table and
- transmitting a presence signal from the presence sensor to the control unit.

15. A method according to one of the preceding claims 13-14,
With any of the steps selected from:
- activating a shape memory alloy component to move from said first status to said second status,
- activating a suction means in away that it has less pressure in said second status than in said first status,
- activating a magnetic component in a way that it applies a magnetic force in said second status and
- mechanically pre-stressing a tension element integrated into a flexible netlike component in said first status and relieving the mechanically pre-stressed tension element in said second status.
